# EUROPEAN PATENT SPECIFICATION

(11) **EP 4 030 584 B1**
(45) Date of publication and mention of the grant of the patent: **15.04.2026**
(21) Application number: 21152037.4
(22) Date of filing: 18.01.2021
(51) Int. Cl.: H02J 9/06, H05B 45/10, H05B 47/105

(54) **EMERGENCY LED DRIVER**
NOTFALL-LED-TREIBER
PILOTE DE DEL DE SECOURS

(43) Date of publication of application: 20.07.2022
(73) Proprietor: Tridonic GmbH & Co. KG, 6851 Dornbirn (AT)
(72) Inventor: Wilson, Ian, 6850 Dornbirn (AT)
(74) Representative: Rupp, Christian

(56) References cited:
- CN-U- 202 197 427
- US-A1- 2012 104 858
- US-B2- 9 887 580

## Description

### TECHNICAL FIELD OF THE INVENTION

The invention relates to an emergency LED driver as well as to a system and a method for providing a power supply to an LED load.

### BACKGROUND OF THE INVENTION

Emergency LED (light-emitting diode) converters, which can provide LED loads with power supply in the event of a mains failure, are known. Often, such emergency LED converters are connected to external drivers which supply the LED load as long as the mains power is present.

An emergency LED converter can be connected to an external driver via relays. In case of a mains failure, the relays can switch the power supply of the LED load or a part thereof from the external driver to the emergency converter. The emergency converter can then provide a battery power supply for an autonomy period, which typically lasts 1 to 3 hrs.

A disadvantage of this relay-coupled approach is that with short mains interruptions the relays, which are powered off the mains, can drop out. It is difficult to synchronize the relays, because the power to their coils is lost before any timing control from a microcontroller could take effect. This means that a relay that connects the external converter to the LED load can be opened while the external driver is still operating. This can lead to a high output voltage built-up on the output side of the external driver. If the mains interruption is short, the relay quickly reconnects the external driver to the LED load, causing high current and power surges in the load and in the relay contacts. This so called "hot plugging" can lead to welding of the contacts and can damage the LED load. This negative effect can be particularly strong for high power converters that operate at 300-450W.

For example, the document US 2012/0104858 A1 discloses an electronic circuit for converting an existing mains-operated luminaire into an emergency luminaire. The mains-operated luminaire includes an LED array and a mains converter for supplying the same with power. An emergency lighting element having an electronic circuit supplies the LED array with power from a storage battery during emergency operation. During the transition to the emergency operation, the circuit disconnects the power supply from the mains converter and subsequently controls the power output of the storage battery and the input power of the LED array by way of a closed loop.

Thus, it is an objective to provide an improved emergency LED driver and an improved method for supplying an LED load, which avoid the above-mentioned disadvantages. In particular, it is an objective to protect an LED load from unwanted voltage pulses or surges after a short mains failure.

### SUMMARY OF THE INVENTION

The object of the present invention is achieved by the solution provided in the enclosed independent claims. Advantageous implementations of the present invention are further defined in the dependent claims.

According to a first aspect, the invention relates to an emergency LED driver for supplying an LED load, comprising: a mains connection for receiving a mains voltage; an output port configured to forward a driver supply voltage based on said mains voltage to an external driver; an input port configured to receive an LED supply voltage from the external driver; an LED connection for connecting the LED load to the emergency LED driver; and a load side relay; wherein, in a non-emergency mode of the emergency LED driver, the load side relay is adapted to electrically connect the LED connection with the input port, such that the LED supply voltage received at the input port is forwarded to the connected LED load; and wherein, upon detection of a failure of the mains voltage, the load side relay is configured to maintain the connection between the LED connection and the input port for a predefined delay time, and, after said delay time has passed, disconnect the input port from the LED connection and connect the LED connection to a battery to provide a voltage supply to the LED load from the battery wherein, during the delay time, a current supplied to the LED load from the external driver goes to zero, and wherein the emergency LED driver comprises a mains side relay, which is connected before the output port , wherein the mains side relay is configured to interrupt the forwarding of the driver supply voltage as soon as the failure of the mains voltage occurs, and characterized in that the mains side relay is configured to delay a return to the non-emergency mode of the emergency LED driver by a minimum of one second after a previously failed mains voltage has been restored to enable a shutdown circuit of the external driver to reset.

This achieves the advantage that, during the delay time, the LED current can fully drop allowing a zero current and/or zero power switching from the external driver to the emergency LED driver once the mains is restored. In other words, any current or voltage that is still present in the external driver upon mains failure can dissipate during the delay time. Thus, unwanted surges or voltages pulses to the LED load when reconnecting the external driver after a short mains failure, so called "hot-plugging" effects, can be avoided. In addition, this allows high powers to be switched by a relatively small load side relay because the connected LED load itself commutates the load current. For instance, the switched power can be four times the rating of the relay.

The driver supply voltage can be the mains voltage, which is passed on unchanged to the external driver. Alternatively, the mains voltage can be stabilized and/or converted by the emergency LED driver, in particular from an AC to a DC voltage, to generate the driver supply voltage.

In particular, the non-emergency mode is a mode of the emergency LED driver during which a stable mains voltage is present. In the non-emergency mode the LED load can be supplied by the LED supply voltage provided from the external driver. If the mains voltage fails, the emergency LED driver switches to an emergency mode, in which the load side relay separates the external driver from the LED load and the LED load is supplied directly or indirectly by the battery. This separation of the external driver upon detection of the mains failure is, preferably, delayed by the predefined delay time to allow the external driver to dissipate any residual energy.

The battery supply of the LED can be done indirectly via an electronic power supply circuit, which adapts the battery power supply towards the particular load. For example, a boost or buck boost topology can be used for the battery power conversion.

The battery can be an internal battery of the emergency LED driver or an external battery, which is connected to the emergency LED driver.

The external driver can be a general illumination mains driver, i.e. a regular LED driver for regular mains based operation of the LED load. In particular, the external driver comprises an LED converter. The external driver may comprise an input port for receiving the forwarded driver supply voltage from the emergency LED driver and output terminals for forwarding the LED supply voltage to the emergency LED driver.

The LED load can be a luminaire, in particular an emergency light or an illuminated escape sign. The LED load can comprise an LED module or an LED track with at least one light emitting diode (LED).

In an embodiment, the load side relay is configured to receive a power supply from the battery to enable the load side relay to maintain the connection between the input port and the LED connection during the delay time. This achieves the advantage that the load side relay can stay operable without mains voltage supply at least for the duration of the delay time.

In particular, the load side relay is configured to receive its power supply from the mains voltage and, upon failure of the mains voltage, from the battery. Thereby, the load side relay can receive sufficient electrical power from the battery to remain closed during the delay time.

In an embodiment, the emergency LED driver further comprises a transistor, in particular a MOSFET, in series with the load side relay, wherein the transistor is configured to regulate the voltage across the load side relay. In particular, the transistor can further be configured to control a switching of the load side relay.

The transistor can further be configured to control the load side relay to disconnect the external driver from the LED load after the delay time has passed. For instance, the transistor can be configured to switch the load side relay at the end of the delay time by interrupting the power supply from the battery.

According to the invention, the emergency LED driver comprises a mains side relay, which is connected before the output port, wherein the mains side relay is configured to interrupt the forwarding of the driver supply voltage as soon as the failure of the mains voltage occurs. Preferably, this almost immediate shutdown of the mains side relay upon the mains failure interrupts any voltage supply to the external driver.

In an embodiment, the mains side relay is configured to interrupt the forwarding of the driver supply voltage before the input port is disconnected from the LED connection by the load side relay. This achieves the advantage that any built up energy within the external driver can efficiently dissipate on the output side of the external driver during the delay time.

In an embodiment, the emergency LED driver comprises a further transistor, in particular a further MOSFET, in series with the mains side relay, wherein the further transistor is configured to regulate the voltage across the mains side relay. In particular, the further transistor can be configured to control a switching of the mains side relay.

In an embodiment, the emergency LED driver comprises a processor, in particular a microcontroller, configured to control the operation of the transistor and/or the further transistor. This achieves the advantage that the transistors and, thus, relays can be controlled efficiently. In partiulcar, by controlling the respective transistors, the processor can control the operation of the relays.

The processor can be a microcontroller of the emergency LED driver. The processor can be configured to detect the mains failure and to control the load side relay to remain closed during the delay time after said mains failure detection. After the delay time has passed, the processor can be configured to control the load side relay to switch over the power supply of the LED load to the battery. The processor can further be configured to immediately open the mains side relay after detecting the mains failure.

In particular, the processor can be configured to execute a duty protocol, which maintains the supply to the load side relay by switching duty levels after the loss of mains supply to a battery supply of the relay.

In an embodiment, the predefined delay time is 250 milliseconds or less. This achieves the advantage that sufficient time is provided for build-up energy in the external driver to dissipate.

In an embodiment, the emergency LED driver comprises a battery connection for connecting the battery, which is preferably an external battery.

In an embodiment, the driver supply voltage that is forwarded to the external driver is an AC voltage, in particular the mains voltage.

Alternatively, the driver supply voltage that is forwarded to the external driver can be a DC voltage, wherein the emergency LED driver comprises an AC/DC converter, which is configured to convert the mains voltage into the supply voltage. In particular, the AC/DC converter is a flyback converter.

The AC/DC converter can also be an external converter that is connected to the emergency LED driver.

In an embodiment, the emergency LED driver comprises an emergency LED converter.

According to a second aspect, the invention relates to a system comprising the external driver, the battery and the emergency LED driver according to the first aspect of the invention.

The system may further comprise the LED load.

According to a third aspect, the invention relates to a method for supplying an LED load, wherein the LED load is connected to an LED connection of an emergency LED driver, comprising:
- receiving a mains voltage at the emergency LED driver;
- forwarding a driver supply voltage based on said mains voltage to an external driver;
- receiving an LED supply voltage from the external driver at an input port of the emergency LED driver;
- in a non-emergency mode of the emergency LED driver, connecting the LED connection with the input port via a relay, such that the LED supply voltage received at the input port is forwarded to the connected LED load,
- upon detection of a failure of the mains voltage, maintaining the connection between the LED connection and the input port for a predefined delay time via a load side relay, and
- after said delay time has passed, disconnecting the input port from the LED connection via the load side relay and connecting the LED connection to a battery to provide a voltage supply to the LED load from the battery wherein, during the delay time, a current supplied to the LED load from the external driver goes to zero, interrupting the forwarding of the driver supply voltage to the external driver via a mains side relay as soon as the failure of the mains voltage occurs, and characterized by delaying via the mains side relay a return to the non-emergency mode of the emergency LED driver, by a minimum of one second after a previously failed mains voltage has been restored, to enable a shutdown circuit of the external driver to reset.

This achieves the advantage that, during the delay time, the LED current can fully drop allowing a zero current and/or zero power switching from the external driver to the emergency LED driver once the mains is restored. In other words, any current or voltage that is still present in the external driver upon mains failure can dissipate during the delay time. Thus, unwanted surges or voltages pulses to the LED load when reconnecting the external driver after a short mains failure, so called "hot-plugging" effects, can be avoided.

The battery can be an internal battery of the emergency LED driver or an external battery, which is connected to the emergency LED driver.

In an embodiment, the method further comprises: providing a power supply to the load side relay via the connected battery to enable the load side relay to maintain the connection between the input port and the LED connection during the delay time. This achieves the advantage that the load side relay can stay operable without mains voltage supply at least for the duration of the delay time.

In an embodiment, the method further comprises: interrupting the forwarding of the driver supply voltage to the external driver via a mains side relay as soon as the failure of the mains voltage occurs.

In an embodiment, the mains side relay is configured to interrupt the forwarding of the driver supply voltage before the input port is disconnected from the LED connection by the load side relay. This achieves the advantage that any built up energy within the external driver can efficiently dissipate on the output side of the external driver during the delay time.

### BRIEF DESCRIPTION OF THE DRAWINGS

The invention will be explained in the followings together with the figures.
- Fig. 1: shows a schematic diagram of an emergency LED driver for supplying an LED load according to an embodiment;
- Fig. 2: shows a schematic diagram of an emergency LED driver and an associated external driver according to an embodiment;
- Fig. 3: shows a schematic diagram of an emergency LED driver and an associated external driver according to a further embodiment;
- Fig. 4: shows a circuit diagram of an emergency LED driver according to an embodiment;
- Fig. 5: shows a circuit diagram of an emergency LED driver according to another embodiment;
- Fig. 6: shows timing diagrams of various electrical parameters of an emergency LED driver during a failure of a mains voltage according to an embodiment; and
- Fig. 7: shows a flow diagram of a method for supplying an LED load.

### DETAILED DESCRIPTION OF THE PREFERRED EMBODIMENTS

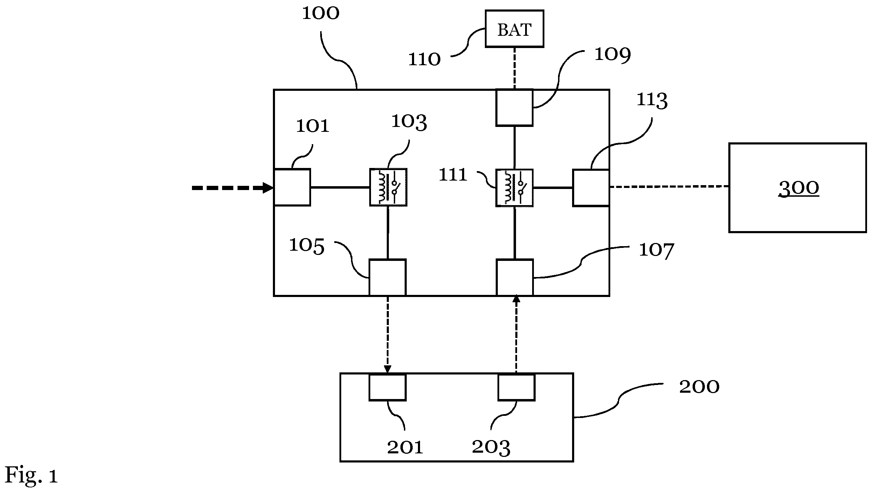

Fig. 1 shows a schematic diagram of an emergency LED driver 100 for supplying an LED load 300 according to an embodiment.

The emergency LED driver 100 comprises a mains connection 101 for receiving a mains voltage, an output port 105 configured to forward a driver supply voltage based on said mains voltage to an external driver 200, an input port 107 configured to receive an LED supply voltage from the external driver 200, and an LED connection 113 for connecting the LED load 300 to the emergency LED driver 100. The emergency driver 100 further comprises a relay 111, wherein, in a non-emergency mode of the emergency LED driver 100, the load side relay 111 is adapted to electrically connect the LED connection 113 with the input port 107, such that the LED supply voltage received at the input port 107 is forwarded to the connected LED load 300.

Upon a failure of the mains voltage, the load side relay 111 is configured to maintain the connection between the LED connection 113 and the input port 107 for a predefined delay time. The delay time can be 250 milliseconds or less. After said delay time has passed, the load side relay 111 is configured to disconnect the input port 107 from the LED connection 113 and to switch over the voltage supply of the LED load 300 to a battery 110. In particular, the delay time can be configurable such that any suitable delay time can be set.

In the embodiment shown in Fig. 1, the battery 110 is an external battery, which is connected to a battery connection 109 of the emergency LED driver 100. Alternatively, the battery 110 can be an internal battery of the emergency driver 100. In particular, the battery 110 is capable of providing an emergency power supply to the LED load 300.

Delaying the load side relay 111 from switching to the battery 110 in case of a mains outage enables the energy in the external driver 200 to be dissipated and stops the generation of high output voltages that can lead to hot plugging and damage to the LED load 300 and/or relay 111 contacts. Additionally, this approach enables the power switched by the load side relay 111 to be minimal, because, by the time the load side relay 111 contacts are opened, the current is commutated by the LED load 300. This can further reduce stresses at the external driver.

Preferably, the load side relay 111 is configured to receive a power supply from the connected battery 110. This additional power supply by the battery 110 enables the load side relay 111 to maintain the connection between the input port 107 and the LED connection 113 during the delay time. After the delay time has passed by, the load side relay 111 can connect the LED connection 113 to the battery 110 by establishing a connection between the LED connection 113 and the battery connection 109. In particular, the load side relay 111 can be configured to receive a power supply from the mains voltage or from the battery depending on the operating mode of the emergency LED driver 100.

The driver supply voltage that is forwarded to the external driver 200 can be the AC mains voltage, e.g. 230 V, which is passed on unchanged. Alternatively, the mains voltage can be stabilized and/or converted by the emergency LED driver 100, in particular, from an AC to a DC voltage to generate the driver supply voltage.

The non-emergency mode of the emergency LED driver 100 can be a mode during which a stable mains voltage is present. In the non-emergency mode, the LED load 300 can be supplied by the LED supply voltage provided from the external driver 200. If the mains voltage fails, the emergency LED driver 100 switches to an emergency mode, in which the load side relay 111 separates the external driver 200 from the LED load 300 and the LED load 300 is supplied by the battery 110 instead.

In particular, the load side relay 111 is an output relay, which controls from which voltage source, e.g. mains or battery 110, the LED load 300 is supplied.

The external driver 200 can be a general illumination mains driver, i.e. a regular LED driver for regular mains based operation of the LED load. In particular, the external driver 200 comprises an LED converter. The external driver shown in Fig. 1 comprises an input port 201 for receiving the forwarded driver supply voltage from the emergency LED driver 100 and output terminals 203 for forwarding the LED supply voltage to the emergency LED driver 100.

The LED load 300 can be a luminaire, in particular an emergency light or an illuminated escape sign. The LED load 300 can comprise an LED module or an LED track.

The input port 107 can comprise connection pins on the housing of the emergency LED driver 100 for electrically connecting the external driver 200. Likewise, the mains connection 101, the output port 105, the LED connection 113 and/or the battery connection 109 can each comprise one or two connection pins to enable a suitable electrical connection.

The emergency LED driver 100 shown in Fig. 1 further comprises a mains side relay 103, which is connected before the output port 105. The mains side relay 103 can be configured to interrupt the forwarding of the driver supply voltage as soon as the failure of the mains voltage occurs. Preferably, this shutdown of the mains side relay 103 interrupts the voltage supply to the external driver 200 almost immediately after the mains failure occurs.

In particular, the mains side relay 103 can be configured to interrupt the forwarding of the driver supply voltage before the input port 107 is disconnected from the LED connection 113 by the load side relay 111.

For example, each of the relays 103, 111 is an electrically operated switch comprising at least one input and at least one contact terminal. Each of the relays 103, 111 remains closed (switched on) for as long as a sufficient current flows through the relay, i.e. for as long as there is sufficient current in its coil to operate the contact(s), e.g. the mains. If the power supply of one of the relays 103, 111 is interrupted, the relay 103, 111 is opened (switched off). Each relay 103, 111 can comprise a coil and a movable armature.

Thus, the load side relay 111 and the mains side relay 103 can be configured to disconnect the external driver in case of a mains failure in a controlled manner and in a sequence that prevents hot-plugging of the load 300 and potential surges seen by the output load side 111. This can prevent open circuit stresses being applied to the external driver 200 and the luminaire wiring. It may also prevent the external driver 200 from going into an open circuit load shutdown from where its logic circuits need to be reset.

The mains side relay 103 can be configured to delay a reconnection of the external driver 200 to the output port 105 after the mains voltage is reinstated by a further delay of a minimum of 1 second. In other words, the mains side relay 103 can delay the return to a normal mode of operation after a previously failed mains voltage has been restored. This further delay can be caused by a delay circuit of the external driver 200 and enables a shutdown circuit of the external driver 200 to reset. Without this further delay, the shutdown circuit might remain locked off.

The emergency LED driver 100 can comprise a processor (not shown), e.g. a microcontroller, which can be configured to control the switching of the relays 103, 111, for instance via dedicated transistors for controlling the relays coils 103, 111.

The processor can be configured to detect the mains failure, and control the relays 103, 111 to switch-off in the above described sequence, i.e. control the mains side relay 103 to switch off first, and subsequently, after the delay time has passed, control the load side relay 111 to switch off.

In particular, the processor can be configured to execute a duty protocol which maintains the supply to the load side relay by switching duty levels after the loss of mains supply to a battery supply of the relay 111.

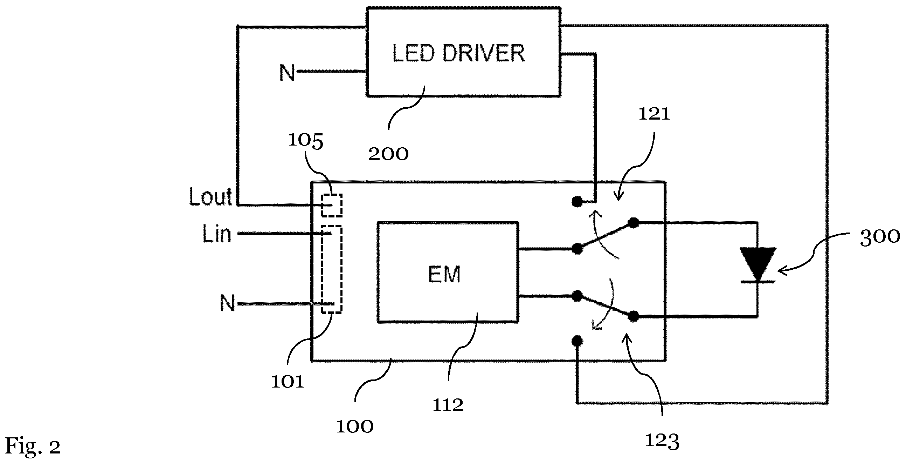

Fig. 2 shows a schematic diagram of an emergency LED driver 100 and an associated external driver 200 according to an embodiment. For example, the emergency LED driver 100 and the external driver 200 shown in Fig. 2 may correspond to the respective drivers 100, 200 shown in Fig. 1.

As shown in Fig. 2, the emergency LED driver 100 can comprise an emergency LED converter 112. The emergency LED converter 112 can be connected to the battery (not shown).

In the highly schematic diagram shown in Fig. 2, the load side relay 111 is depicted by two switches 121, 123. In a non-emergency mode of the emergency LED driver 100, the switches connect the external driver to the LED load 300. Upon a mains failure, the emergency LED driver 100 enters the emergency mode and the switches 121, 123 disconnect the external driver 200 and connect the emergency LED converter 112.

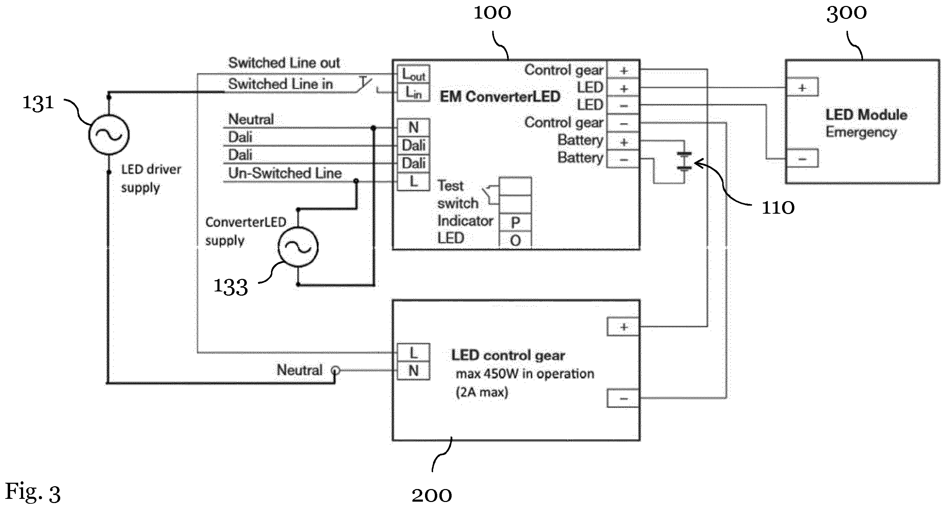

Fig. 3 shows a schematic diagram of the emergency LED driver 100 and the associated external driver 200 according to a further embodiment.

The emergency LED driver 100 can be an emergency converter, which receives the mains voltage from an LED driver supply 131 via a switched line in connection at a mains connection Lᵢₙ and forwards said voltage to the external driver 200 via the output connection Lₒᵤₜ. The relay 103 in the emergency driver can controls the power to the external driver 200. Additionally, an external switch (wall switch) can independently switch power to the external driver 200 as required by the user, e.g. to switch lights when not required.

The external driver in Fig. 3 is an LED control gear, which is capable of enabling loads of up to 450 W. Thus, the relays 103, 111 of the emergency LED converter 100 in Fig. 3 are preferably capable of switching up to this power level. The LED control gear 200 forwards the LED supply voltage to the input port of the emergency converter 100, which is labelled "control gear". The emergency LED converter 100 further comprises a battery connection comprising two pins labelled "Battery", and an LED connection comprising two pins labelled "LED".

The emergency LED driver 100 in Fig. 3 comprises a supply voltage port (terminals N, L) for receiving a dedicated supply voltage, e.g. an AC mains, from a voltage source 133. The dedicated supply voltage can be used for the battery charger and to detect the mains failure. This unswitched supply can also be used to power the relays 103, 111.

The emergency LED driver 100 may further comprise a DALI communication interface, a test switch and an indicator LED.

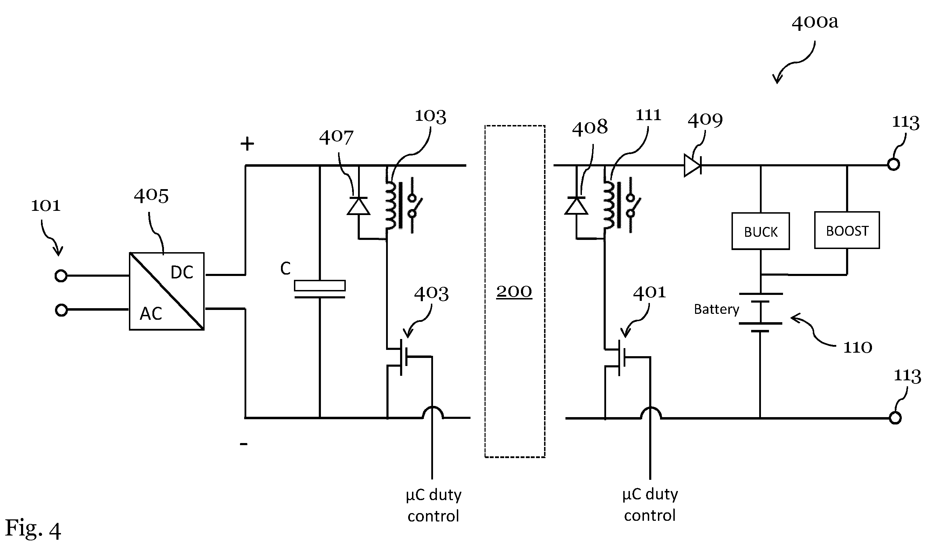

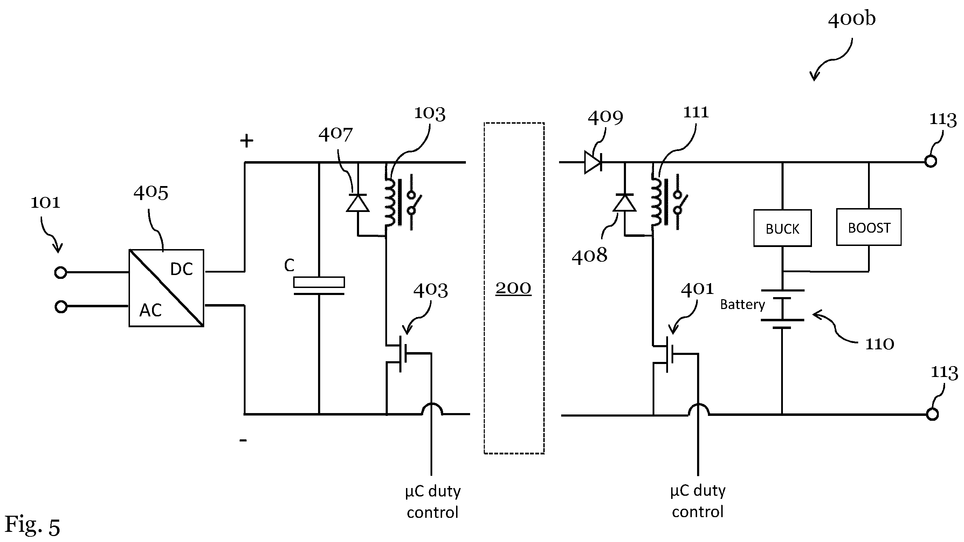

Fig. 4 and 5 show circuit diagrams 400a, 400b of the emergency LED driver 100 according to two embodiments.

The circuit diagrams 400a, 400b of Fig. 4 and Fig. 5 only differ by the position of a diode 409, which is arranged behind the load side relay 111 in Fig. 4 and in front of the load side relay 111 in Fig. 5.

Both circuit diagrams 400a, 400b show the mains side relay 103, which forwards the driver supply voltage to the external driver 200, and the load side relay 111, which forwards the LED supply voltage from the external driver 200 to the LED load 300. In the highly schematic circuit diagrams 400a, 400b of Figs. 4 and 5 the external driver 200 is depicted in-between the mains side and the load side of the circuit. Typically, the external driver 200 is connected to the relay contacts of the mains side relay 103 and the power is supplied to the external driver 200 via said relay contacts, while the coil is operating the contacts. A respective transistor 401, 403 is connected in series to each of the relays 103, 111. The transistors 401, 403 can be configured to regulate the voltage at the respective relays 103, 111, in particular, to ensure that the coil voltage of each relay 103, 111 is near nominal.

Each of the transistors 401, 403 can be a field-effect transistor (FET), in particular a metal-oxide-semiconductor field-effect transistor (MOSFET).

In particular, each of the transistors 401, 403 can be controlled by the microcontroller of the emergency LED driver 100. In this way, the microcontroller can control the switching of the relays 103, 111.

The load side relay 111 can be an output pole relay and the mains side relay 103 can be a 3^{rd} pole relay.

The circuit diagrams 400a, 400b further show a respective diode 407, 408 connected in parallel to each of the relays 103, 111.

The circuit further comprises a battery circuit for connecting the battery 110, which comprises a buck-boost converter. Alternatively, the battery circuit can comprise a boost converter or another type of converter.

The emergency LED driver 100 can further comprise a converter 405, in particular a flyback converter. The flyback converter can be configured to charge the battery 110 and to provide power to the relays 103, 111. For example, both of the relays 103, 111 can be supplied from an output DC rail of the converter 405.

The converter 405 can also be an external converter that is connected to the emergency LED driver 100.

For example, upon a mains failure, a bulk storage capacitor C cannot sustain the relay 103, 111 power supply by itself for more than tens of milliseconds and, therefore, both relays 103, 111 would drop out even at relatively short interruptions of the mains supply if no other power supply is provided. The external driver 200 may still be operational when its load is disconnected by the load side relay 111, leading to its output capacitor being charged to a high voltage and its protection shutdown circuits operating. This can be avoided by powering the load side relays 111 from the battery 110 after the mains failure, thus, maintaining the connection between the external driver 200 and the LED load 300. In this way, any charge that is build-up in the external driver can dissipate before the power supply of the LED load 300 is finally switched over to the battery 110.

Because the shutdown circuits of the external driver 200 are triggered, the mains side relay 103 has a typical one second delay before reconnection to allow the external driver to reset. On return of the mains supply the load side relay 111 may be switched immediately but a delay circuit can delay the mains side relay 103 by a minimum of one second to enable the external driver 200 shutdown circuit to reset, otherwise it would remain locked off.

Preferably, supplying the load side relay 111 from the battery side of the emergency driver 100 allows to hold the relay up to 0.25 seconds which is sufficient to enable the external converter to dissipate its residual energy, especially because its mains supply can be disconnected almost immediately by the mains side relay 103 if the mains is lost. In particular, the mains side relay 103 is configured to disconnect immediately as soon as a main outage is detected or alternatively as soon as the flyback has insufficient energy to support the relay.

Additionally after approximately 250 milliseconds, the transistor 401 supplying the load side relay 111 can be switched off by the processor of the emergency LED driver 100, thereby avoiding excessive battery losses in emergency mode.

In partiulcar, supplying a relay, such as the load side relay 111 from the battery 110 for a long time can lead to the relay draining the battery 110, which would affect the system autonomy and battery life if the drain persists after a low battery cut off at the end of the emergency duration. Therefore, the transistor 401 of the load side relay 111 can be configured to disconnect the load side relay 111 from the battery 110 after the delay time has passed to prevent this drain.

Thus, maintaining the connection of the external driver 200 to the LED load via the load side relay may lead to several advantages, such as reduced stresses at the external driver 200 by not pulling its load while it is still powered and reduced voltages on the external driver 200 associated wiring and connectors and the LED load 300 by not putting the external converter into a fault mode and, therefore, also preventing a hot plugging event.

Furthermore, hot plugging events resulting in a short mains interruption and a high voltage generation on the external driver 200 by pulling its load with the load side relay can be avoided. It particular, it can be avoided that a high voltage that builds-up on the output capacitor of the external driver 200 could apply a damaging pulse to the LED load 300 and the contacts of the load side relay 111 when said contacts are reconnected at the end of the mains outage. Thus, a faulty shutdown of the external driver 200 can be avoided.

Finally, stresses in the load side relay 111 switching can be reduced, e.g. for applications where a small relay is expected to support between 300-450 W loads. In partiulcar, the actual switch power can be reduced to a negligible level because the load is already commutated by the LED and is not actually switched by the load side relay contact. This might enable an extremely small relay rated for 80 W to switch an electrical power of more than four times its rating.

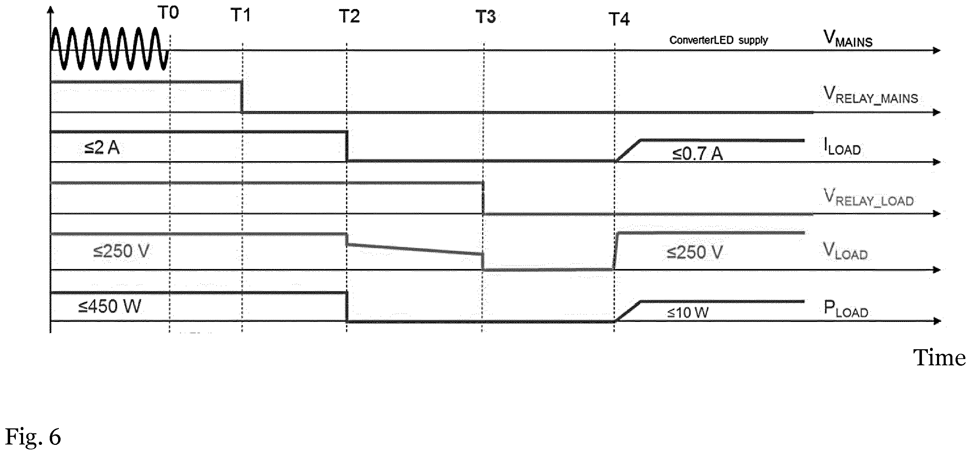

Fig. 6 shows timing diagrams of various electrical parameters of an emergency LED driver during a failure of a mains voltage according to an embodiment.

The electrical parameters shown in the diagrams of Fig. 6 are: the AC mains voltage (V_{MAINS}), the supply voltage of the mains side relay 103 (V_{RELAY_MAINS}), the LED load current (I_{LOAD}), the supply voltage of the load side relay 111 (V_{RELAY_LOAD}), the voltage supplied to the LED load 300 (V_{LOAD}) and the power supplied to the LED load 300 (P_{LOAD}).

As shown in Fig. 6, prior to the time Tₒ, the AC mains voltage (V_{MAINS}) is present and the external driver 200 is in operation. Both relays 103, 111 are switched on and the LED load 300 is supplied with a power for, e.g., 450 W during that time.

At time Tₒ, the mains fails. This failure of the mains is detected by the emergency driver 100 at time T₁, which switches off the mains relay 103, e.g. by means of the microcontroller and the further transistor 403. However, the load side relay 111 maintains connection of the external driver 200 to the LED load 300 for the delay time, which is, e.g., 250 milliseconds and ends at T₃.

In a short time interval of several milliseconds after T₁, residual energy from the external driver 200 will continue to drive the LED load 300 until the current in the LED load 300 goes to zero at time T₂. The load side relay stays connected, i.e. the connection of the external driver 200 to the LED load 300 is maintained, until time T₃. Due to this connection, the LED load voltage slowly decays. The power through the relay contacts of the load side relay 111 is zero since I_{LOAD} is zero. The load side relay 111 receives its power supply from the battery 110 during this time.

At time T₃, i.e. after the delay time has passed, the load side relay 111 is finally disconnected with zero power. At time T₄, the emergency driver 100 starts to power the LED load at much lower power (≤ 10 W) from the battery 110. With both relays 103, 111 switched off, the emergency operation continues until the mains power is restored again (not shown).

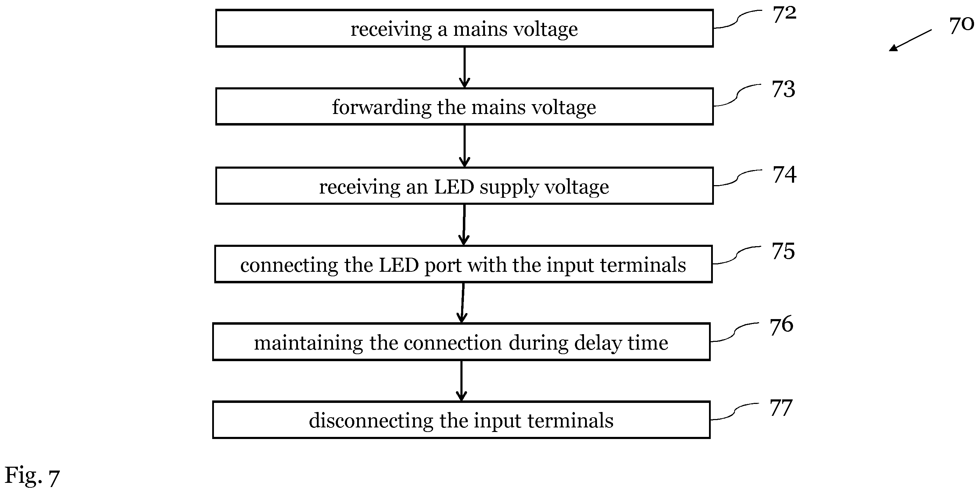

Fig. 7 shows a flow diagram of a method 70 for supplying the LED load 300 according to an embodiment.

The LED load 300 is connected to the LED connection 113 of the emergency LED driver 100, e.g. by physical wiring. The method 70 comprises the steps of:
- receiving 72 the mains voltage at the emergency LED driver 100;
- forwarding 73 the driver supply voltage based on said mains voltage to the external driver 200;
- receiving 74 the LED supply voltage from the external driver 200 at an input port 107 of the emergency LED driver 100;
- in a non-emergency mode of the emergency LED driver 100, connecting 75 the LED connection 113 with the input port 107 via the load side relay 111, such that the LED supply voltage received at the input port 107 is forwarded to the connected LED load 300,
- upon a failure of the mains voltage, maintaining 76 the connection between the LED connection 113 and the input port 107 for a predefined delay time via the load side relay 111, and
- after said delay time has passed, disconnecting 77 the input port 107 from the LED connection 113 via the load side relay 111 and switching over the voltage supply of the LED load 300 to the battery 110.

Preferably, the method comprises the further step of: providing a power supply to the load side relay 111 via the connected battery 110 of the emergency LED driver 100 to enable the load side relay 111 to maintain the connection between the input port 107 and the LED connection 113 during the delay time.

The method comprises the further step of: interrupting the forwarding of the driver supply voltage to the external driver 200 via the mains side relay 103 as soon as the failure of the mains voltage occurs, in particular as soon as the failure of the mains voltage is detected by, e.g., the processor of the emergency LED driver 100.

The mains side relay 103 can be configured to interrupt the forwarding of the driver supply voltage before the input port 107 is disconnected from the LED connection 113 by the load side relay 111.

## Claims

1. An emergency LED driver (100) for supplying an LED load (300 ), comprising:
a mains connection (101 ) for receiving a mains voltage;
an output port (105 ) configured to forward a driver supply voltage based on said mains voltage to an external driver (200 );
an input port (107 ) configured to receive an LED supply voltage from the external driver (200 );
an LED connection (113 ) for connecting the LED load (300 ) to the emergency LED driver (100 ); and
a load side relay (111 );
wherein, in a non-emergency mode of the emergency LED driver (100 ), the load side relay (111 ) is adapted to electrically connect the LED connection (113 ) with the input port (107 ), such that the LED supply voltage received at the input port (107 ) is forwarded to the connected LED load (300 ); and
wherein, upon detection of a failure of the mains voltage, the load side relay (111 ) is configured to maintain the connection between the LED connection (113 ) and the input port (107 ) for a predefined delay time, and, after said delay time has passed, disconnect the input port (107 ) from the LED connection (113 ) and connect the LED connection (113) to a battery (110) to provide a voltage supply to the LED load (300 ) from the battery (110 )
wherein, during the delay time, a current supplied to the LED load (300) from the external driver (200) goes to zero,
and wherein the emergency LED driver (100) comprises a mains side relay (103), which is connected before the output port (105),
wherein the mains side relay (103) is configured to interrupt the forwarding of the driver supply voltage as soon as the failure of the mains voltage occurs, and
**characterized in that**
the mains side relay (103) is configured to delay a return to the non-emergency mode of the emergency LED driver (100)
by a minimum of one second
after a previously failed mains voltage has been restored to enable a shutdown circuit of the external driver (200) to reset.

2. The emergency LED driver (100) according to claim 1 ,
wherein the load side relay (111 ) is configured to receive a power supply from the battery (110) to enable the load side relay (111 ) to maintain the connection between the input port (107 ) and the LED connection (113 ) during the delay time.

3. The emergency LED driver (100) according to claim 1 or 2 ,
further comprising a transistor (401 ), in particular a MOSFET, in series with the load side relay (111 ), wherein the transistor (401 ) is configured to regulate the voltage across the load side relay (111 ).

4. The emergency LED driver (100) according any one of the preceding claims,
wherein the mains side relay (103 ) is configured to interrupt the forwarding of the driver supply voltage before the input port (107 ) is disconnected from the LED connection (113 ) by the load side relay (111 ).

5. The emergency LED driver (100) according any one of the preceding claims,
comprising a further transistor (403 ), in particular a further MOSFET, in series with the mains side relay (103 ), wherein the further transistor (403 ) is configured to regulate the voltage across the mains side relay (103 ).

6. The emergency LED driver (100) according to claim 3 or 5,
wherein the emergency LED driver (100 ) comprises a processor, in particular a microcontroller, configured to control the operation of the transistor (401 ) and/or the further transistor (403).

7. The emergency LED driver (100) according any one of the preceding claims,
wherein the predefined delay time is 250 milliseconds or less.

8. The emergency LED driver (100) according any one of the preceding claims,
wherein the emergency LED driver (100) comprises a battery connection (109 ) for connecting the battery (110 ), which is preferably an external battery.

9. The emergency LED driver (100) according any one of the preceding claims,
wherein the driver supply voltage that is forwarded to the external driver (200 ) is an AC voltage, in particular the mains voltage.

10. A system comprising
the external driver (200 ),
the battery (110 ) and
the emergency LED driver (100) according to any one of the preceding claims.

11. A method (70 ) for supplying an LED load (300 ),
wherein the LED load (300 ) is connected to an LED connection (113 ) of an emergency LED driver (100 ), comprising the steps of:
- receiving (72 ) a mains voltage at the emergency LED driver (100 );
- forwarding (73 ) a driver supply voltage based on said mains voltage to an external driver (200 );
- receiving (74 ) an LED supply voltage from the external driver (200 ) at input port (107 ) of the emergency LED driver (100 );
- in a non-emergency mode of the emergency LED driver (100 ), connecting (75 ) the LED connection (113 ) with the input port (107 ) via a load side relay (111 ), such that the LED supply voltage received at the input port (107 ) is forwarded to the connected LED load (300 ),
- upon detection of a failure of the mains voltage, maintaining (7 6) the connection between the LED connection (113 ) and the input port (107 ) for a predefined delay time via the load side relay (111), and
- after said delay time has passed, disconnecting (77 ) the input port (107 ) from the LED connection (113 ) via the load side relay (111 ) and connecting the LED connection (113) to a battery (110) to provide a voltage supply to the LED load (300 ) from the battery (110 )
wherein, during the delay time, a current supplied to the LED load (300) from the external driver (200) goes to zero,
interrupting the forwarding of the driver supply voltage to the external driver (200) via a mains side relay (103) as soon as the failure of the mains voltage occurs, and
**characterized by**
delaying via the mains side relay (103) a return to the non-emergency mode of the emergency LED driver (100),
by a minimum of one second
after a previously failed mains voltage has been restored, to enable a shutdown circuit of the external driver (200) to reset.

12. The method (70 ) according to claim 11 , further comprising:
- providing a power supply to the load side relay (111 ) via the battery (110 ) to enable the load side relay (111 ) to maintain the connection between the input port (107 ) and the LED connection (113 ) during the delay time.

13. The method (70 ) according to claim 11 or 12,
wherein the mains side relay (103 ) is configured to interrupt the forwarding of the driver supply voltage before the input port (107 ) is disconnected from the LED connection (113 ) by the load side relay (111 ).

## Patentansprüche

1. **Notlicht-LED-Treiber (100) zur Versorgung einer LED-Last (300), umfassend:**
- einen Netzanschluss (101) zum Empfangen einer Netzspannung;
- einen Ausgangsport (105), der eingerichtet ist, eine auf der Netzspannung basierende Versorgungsspannung an einen externen Treiber (200) weiterzuleiten;
- einen Eingangsanschluss (107), der eingerichtet ist, eine LED-Versorgungsspannung von dem externen Treiber (200) zu empfangen;
- einen LED-Anschluss (113) zum Anschließen der LED-Last (300) an den Notlicht-LED-Treiber (100); **und**
- ein lastseitiges Relais (111);
**wobei** in einem Nicht-Notbetriebsmodus des Notlicht-LED-Treibers (100) das lastseitige Relais (111) dazu eingerichtet ist, den LED-Anschluss (113) mit dem Eingangsanschluss (107) elektrisch zu verbinden, so dass die am Eingangsanschluss (107) empfangene LED-Versorgungsspannung an die angeschlossene LED-Last (300) weitergeleitet wird; **und**
**wobei,** bei Erfassung eines Ausfalls der Netzspannung, das lastseitige Relais (111) konfiguriert ist, die Verbindung zwischen dem LED-Anschluss (113) und dem Eingangsanschluss (107) für eine vorgegebene Verzögerungszeit aufrechtzuerhalten **und,** nachdem diese Verzögerungszeit abgelaufen ist, den Eingangsanschluss (107) von dem LED-Anschluss (113) zu trennen und den LED-Anschluss (113) mit einer Batterie (110) zu verbinden, um die LED-Last (300) aus der Batterie (110) mit Spannung zu versorgen,
**wobei** während der Verzögerungszeit ein vom externen Treiber (200) an die LED-Last (300) gelieferter Strom auf Null abfällt, **und wobei** der Notlicht-LED-Treiber (100) ein netzseitiges Relais (103) umfasst, das vor dem Ausgangsport (105) angeordnet ist,
**wobei** das netzseitige Relais (103) konfiguriert ist, die Weiterleitung der Versorgungsspannung an den externen Treiber (200) zu unterbrechen, sobald der Ausfall der Netzspannung eintritt, **und dadurch gekennzeichnet, dass** das netzseitige Relais (103) konfiguriert ist, die Rückkehr in den Nicht-Notbetriebsmodus des Notlicht-LED-Treibers (100) um **mindestens eine Sekunde** zu verzögern, nachdem die zuvor ausgefallene Netzspannung wiederhergestellt wurde, um einer Abschaltschaltung des externen Treibers (200) das Zurücksetzen zu ermöglichen.

2. **Notlicht-LED-Treiber (100) nach Anspruch 1,** wobei das lastseitige Relais (111) dazu konfiguriert ist, seine Stromversorgung von der Batterie (110) zu erhalten, um dem lastseitigen Relais (111) zu ermöglichen, die Verbindung zwischen dem Eingangsanschluss (107) und dem LED-Anschluss (113) während der Verzögerungszeit aufrechtzuerhalten.

3. **Notlicht-LED-Treiber (100) nach Anspruch 1 oder 2,** ferner umfassend einen Transistor (401), insbesondere einen MOSFET, in Reihe mit dem lastseitigen Relais (111), **wobei** der Transistor (401) konfiguriert ist, die Spannung über dem lastseitigen Relais (111) zu regeln.

4. **Notlicht-LED-Treiber (100) nach einem der vorhergehenden Ansprüche, wobei** das netzseitige Relais (103) konfiguriert ist, die Weiterleitung der Versorgungsspannung an den externen Treiber (200) zu unterbrechen, **bevor** der Eingangsanschluss (107) von dem LED-Anschluss (113) durch das lastseitige Relais (111) getrennt wird.

5. **Notlicht-LED-Treiber (100) nach einem der vorhergehenden Ansprüche,** umfassend einen weiteren Transistor (403), insbesondere einen weiteren MOSFET, in Reihe mit dem netzseitigen Relais (103), **wobei** der weitere Transistor (403) konfiguriert ist, die Spannung über dem netzseitigen Relais (103) zu regeln.

6. **Notlicht-LED-Treiber (100) nach Anspruch 3 oder 5, wobei** der Notlicht-LED-Treiber (100) einen Prozessor, insbesondere einen Mikrocontroller, umfasst, der konfiguriert ist, den Betrieb des Transistors (401) und/oder des weiteren Transistors (403) zu steuern.

7. **Notlicht-LED-Treiber (100) nach einem der vorhergehenden Ansprüche, wobei** die vorgegebene Verzögerungszeit 250 Millisekunden oder weniger beträgt.

8. **Notlicht-LED-Treiber (100) nach einem der vorhergehenden Ansprüche, wobei** der Notlicht-LED-Treiber (100) einen Batterieanschluss (109) zum Anschließen einer Batterie (110) umfasst, **wobei** die Batterie (110) vorzugsweise extern ist.

9. **Notlicht-LED-Treiber (100) nach einem der vorhergehenden Ansprüche, wobei** die an den externen Treiber (200) weitergeleitete Treiber-Versorgungsspannung eine Wechselspannung ist, insbesondere die Netzspannung.

10. **System, umfassend** den externen Treiber (200), die Batterie (110) **und** den Notlicht-LED-Treiber (100) nach einem der vorhergehenden Ansprüche.

11. **Verfahren (70) zum Versorgen einer LED-Last (300), wobei** die LED-Last (300) an einen LED-Anschluss (113) eines Notlicht-LED-Treibers (100) angeschlossen ist, **und umfassend die Schritte:**
- Empfangen (72) einer Netzspannung am Notlicht-LED-Treiber (100);
- Weiterleiten (73) einer auf der Netzspannung basierenden Versorgungsspannung an einen externen Treiber (200);
- Empfangen (74) einer LED-Versorgungsspannung von dem externen Treiber (200) an einem Eingangsanschluss (107) des Notlicht-LED-Treibers (100);
- **in einem Nicht-Notbetriebsmodus** des Notlicht-LED-Treibers (100) **Verbinden (75)** des LED-Anschlusses (113) mit dem Eingangsanschluss (107) über ein lastseitiges Relais (111), so dass die am Eingangsanschluss (107) empfangene LED-Versorgungsspannung an die angeschlossene LED-Last (300) weitergeleitet wird;
- **bei Erfassung eines Ausfalls der Netzspannung Aufrechterhalten (76)** der Verbindung zwischen dem LED-Anschluss (113) und dem Eingangsanschluss (107) für eine vorgegebene Verzögerungszeit mittels des lastseitigen Relais (111); **und**
- **nach Ablauf der Verzögerungszeit Trennen (77)** des Eingangsanschlusses (107) von dem LED-Anschluss (113) mittels des lastseitigen Relais (111) **und Verbinden** des LED-Anschlusses (113) mit einer Batterie (110), um eine Spannungsversorgung der LED-Last (300) aus der Batterie (110) bereitzustellen,
**wobei** während der Verzögerungszeit ein von dem externen Treiber (200) an die LED-Last (300) gelieferter Strom auf Null abfällt **und wobei** die Weiterleitung der Versorgungsspannung an den externen Treiber (200) durch ein netzseitiges Relais (103) unterbrochen wird, sobald der Ausfall der Netzspannung eintritt, **und dadurch gekennzeichnet, dass** das netzseitige Relais (103) die Rückkehr in den Nicht-Notbetriebsmodus des Notlicht-LED-Treibers (100) um **mindestens eine Sekunde** verzögert, nachdem eine zuvor ausgefallene Netzspannung wiederhergestellt wurde, um eine Abschaltschaltung des externen Treibers (200) zurückzusetzen.

12. **Verfahren (70) nach Anspruch 11,** ferner umfassend:
- **Bereitstellen** einer Stromversorgung für das lastseitige Relais (111) über die Batterie (110), um dem lastseitigen Relais (111) zu ermöglichen, die Verbindung zwischen dem Eingangsanschluss (107) und dem LED-Anschluss (113) während der Verzögerungszeit aufrechtzuerhalten.

13. **Verfahren (70) nach Anspruch 11 oder 12, wobei** das netzseitige Relais (103)
konfiguriert ist, die Weiterleitung der Versorgungsspannung an den externen Treiber (200) zu unterbrechen, **bevor** der Eingangsanschluss (107) durch das lastseitige Relais (111) von dem LED-Anschluss (113) getrennt wird.

## Revendications

1. **Dispositif d'alimentation LED de secours (100) pour alimenter une charge LED (300), comprenant** :
- une connexion au secteur (101) pour recevoir une tension du réseau ;
- un port de sortie (105) configuré pour transmettre une tension d'alimentation basée sur ladite tension du réseau à un pilote externe (200) ;
- un port d'entrée (107) configuré pour recevoir une tension d'alimentation **LED** provenant du pilote externe (200) ;
- une connexion **LED** (113) pour connecter la charge **LED** (300) audit dispositif d'alimentation **LED** de secours (100) ; **et**
- un relais côté charge (111) ;
**dans lequel,** en mode **non-urgence** du dispositif d'alimentation **LED** de secours (100), le relais côté charge (111) est agencé pour connecter électriquement la connexion **LED** (113) au port d'entrée (107), de sorte que la tension d'alimentation **LED** reçue au port d'entrée (107) est transmise à la charge **LED** (300) connectée ; **et**
**dans lequel,** lors de la détection d'une défaillance de la tension du réseau, le relais côté charge (111) est configuré pour maintenir la connexion entre la connexion **LED** (113) et le port d'entrée (107) pendant un temps de retard prédéterminé, **et,** après écoulement dudit temps de retard, pour déconnecter le port d'entrée (107) de la connexion **LED** (113) et connecter la connexion **LED** (113) à une batterie (110) afin de fournir une alimentation électrique à la charge **LED** (300) à partir de la batterie (110),
**dans lequel,** pendant le temps de retard, le courant fourni à la charge **LED** (300) par le pilote externe (200) devient nul, **et dans lequel** le dispositif d'alimentation **LED** de secours (100) comprend un relais côté réseau (103) disposé en amont du port de sortie (105),
**dans lequel** le relais côté réseau (103) est configuré pour interrompre la transmission de la tension d'alimentation au pilote externe (200) dès que la défaillance de la tension du réseau se produit, **et caractérisé en ce que** le relais côté réseau (103) est configuré pour retarder le retour au mode **non-urgence** du dispositif d'alimentation **LED** de secours (100) **d'au moins une seconde** après qu'une tension du réseau précédemment défaillante a été rétablie, afin de permettre la réinitialisation d'un circuit d'arrêt du pilote externe (200).

2. **Dispositif d'alimentation LED de secours (100) selon la revendication 1,** dans lequel le relais côté charge (111) est configuré pour recevoir une alimentation électrique de la batterie (110) afin de permettre audit relais côté charge (111) de maintenir la connexion entre le port d'entrée (107) et la connexion **LED** (113) pendant le temps de retard.

3. **Dispositif d'alimentation LED de secours (100) selon la revendication 1 ou 2,** comprenant en outre un transistor (401), en particulier un MOSFET, en série avec le relais côté charge (111), **lequel** transistor (401) est configuré pour réguler la tension aux bornes du relais côté charge (111).

4. **Dispositif d'alimentation LED de secours (100) selon l'une quelconque des revendications précédentes,** dans lequel le relais côté réseau (103) est configuré pour interrompre la transmission de la tension d'alimentation au pilote externe (200) **avant que** le port d'entrée (107) ne soit déconnecté de la connexion **LED** (113) par le relais côté charge (111).

5. **Dispositif d'alimentation LED de secours (100) selon l'une quelconque des revendications précédentes,** comprenant un autre transistor (403), en particulier un autre MOSFET, en série avec le relais côté réseau (103), **lequel** autre transistor (403) est configuré pour réguler la tension aux bornes du relais côté réseau (103).

6. **Dispositif d'alimentation LED de secours (100) selon la revendication 3 ou 5,** dans lequel le dispositif d'alimentation **LED** de secours (100) comprend un processeur, en particulier un microcontrôleur, configuré pour commander le fonctionnement du transistor (401) et/ou de l'autre transistor (403).

7. **Dispositif d'alimentation LED de secours (100) selon l'une quelconque des revendications précédentes,** dans lequel le temps de retard prédéterminé est de 250 millisecondes ou moins.

8. **Dispositif d'alimentation LED de secours (100) selon l'une quelconque des revendications précédentes,** dans lequel le dispositif d'alimentation **LED** de secours (100) comprend une connexion de batterie (109) pour connecter la batterie (110), ladite batterie (110) étant de préférence externe.

9. **Dispositif d'alimentation LED de secours (100) selon l'une quelconque des revendications précédentes,** dans lequel la tension d'alimentation transmise au pilote externe (200) est une tension alternative, en particulier la tension du réseau.

10. **Système comprenant** : le pilote externe (200), la batterie (110) **et** le dispositif d'alimentation **LED** de secours (100) selon l'une quelconque des revendications précédentes.

11. **Méthode (70) pour alimenter une charge LED (300),** dans laquelle la charge **LED** (300) est connectée à une connexion **LED** (113) d'un dispositif d'alimentation **LED** de secours (100), **comprenant les étapes de** :
- **recevoir (72)** une tension du réseau au niveau du dispositif d'alimentation **LED** de secours (100) ;
- **transmettre (73)** une tension d'alimentation basée sur ladite tension du réseau à un pilote externe (200) ;
- **recevoir (74)** une tension d'alimentation **LED** provenant du pilote externe (200) au niveau d'un port d'entrée (107) du dispositif d'alimentation **LED** de secours (100) ;
- **en mode non-urgence** du dispositif d'alimentation **LED** de secours (100), **connecter (75)** la connexion **LED** (113) au port d'entrée (107) via un relais côté charge (111), de sorte que la tension d'alimentation **LED** reçue au port d'entrée (107) est transmise à la charge **LED** (300) connectée ;
- **lors de la détection d'une défaillance** de la tension du réseau, **maintenir (76)** la connexion entre la connexion **LED** (113) et le port d'entrée (107) pendant un temps de retard prédéterminé via le relais côté charge (111) ; **et**
- **après que** ledit temps de retard s'est écoulé, **déconnecter (77)** le port d'entrée (107) de la connexion **LED** (113) via le relais côté charge (111) **et connecter** la connexion **LED** (113) à une batterie (110) afin de fournir une alimentation électrique à la charge **LED** (300) à partir de la batterie (110),
**où,** pendant le temps de retard, le courant fourni à la charge **LED** (300) par le pilote externe (200) devient nul, **et où** le relais côté réseau (103) interrompt la transmission de la tension d'alimentation au pilote externe (200) dès que la défaillance de la tension du réseau se produit, **et caractérisée en ce que** le relais côté réseau (103) retarde le retour au mode **non-urgence** du dispositif d'alimentation **LED** de secours (100) **d'au moins une seconde** après la restauration d'une tension du réseau précédemment défaillante, afin de permettre la réinitialisation d'un circuit d'arrêt du pilote externe (200).

12. **Méthode (70) selon la revendication 11,** comprenant en outre :
- **alimenter** le relais côté charge (111) via la batterie (110) pour permettre audit relais côté charge (111) de maintenir la connexion entre le port d'entrée (107) et la connexion **LED** (113) pendant le temps de retard.

13. **Méthode (70) selon la revendication 11 ou 12,** dans laquelle le relais côté réseau (103) est configuré pour interrompre la transmission de la tension d'alimentation au pilote externe (200) **avant que** le port d'entrée (107) ne soit déconnecté de la connexion **LED** (113) par le relais côté charge (111).
